# EUROPEAN PATENT APPLICATION

(11) **EP 1 918 720 A1**
(43) Date of publication of application: **07.05.2008**
(21) Application number: 06767612.2
(22) Date of filing: 29.06.2006
(51) Int. Cl.: G01N 35/02, G01N 35/10

(54) **ANALYZER, FEEDER, AGITATOR AND AGITATING METHOD**

(30) Priority: 23.08.2005 JP 2005241191
(71) Applicant: Olympus Corporation, Tokyo 151-0072 (JP)
(72) Inventor: MURAKAMI, Miyuki c/o Olympus Corporation, Shibuya-ku Tokyo 151-0072 (JP)
(74) Representative: von Hellfeld, Axel
(86) International application number: PCT/JP2006/312995
(87) International publication number: WO 2007/023616

(57) **Abstract**

An analyzing apparatus (1), a supply apparatus, an agitation apparatus, and an agitation method for agitating plural different types of liquids to cause reaction and to analyze a reaction liquid. The analyzing apparatus (1) includes a surface-acoustic-wave element that generates a sound wave to agitate a liquid held in a vessel, a supply apparatus (5) that supplies, to a vessel holding a first liquid and transported, a second liquid or a solid of an amount smaller than an amount of the first liquid, and a drive controller that controls generation of the sound wave by the surface-acoustic-wave element so that the first liquid is agitated when the supply apparatus (5) supplies the second liquid or the solid.

## Description

### TECHNICAL FIELD

The present invention relates to an analyzing apparatus, a supply apparatus, an agitation apparatus, and an agitation method.

### BACKGROUND ART

Some conventionally known analyzing apparatuses radiate ultrasound to a reaction vessel from outside of the reaction vessel to generate a sound flow in a liquid held in the reaction vessel to thereby agitate and mix the liquid in a non-contact manner in order to downsize the reaction vessel and to prevent contamination of specimens (see, for example, Patent Document 1).

Patent Document 1: PCT International Publication No. 01/77691

### DISCLOSURE OF INVENTION

### PROBLEM TO BE SOLVED BY THE INVENTION

A chemical analyzing apparatus disclosed in Patent Document 1 dispenses a large amount of reagent into a reaction vessel which holds a small amount of specimen while performing agitation at the same time. Hence, the chemical analyzing apparatus of Patent Document 1 can uniformly agitate the specimen and the reagent because of an effect of agitation obtained from generation of sound flows caused by radiation of ultrasounds, and an effect of agitation obtained from the dispensing itself of the large amount of reagent to the small amount of specimen. However, when the capacity of the reaction vessel is very small, an influence of surface tension of the held liquid increases. Therefore, if a procedure inverse to the one taken for the chemical analyzing apparatus of Patent Document 1 is taken and a small amount of specimen is dispensed into a very small reaction vessel holding a large amount of reagent, the specimen is adsorbed to a liquid surface because of the surface tension of the reagent. Then, the specimen spreads only in the vicinity of the liquid surface and hardly spreads into the reagent of a large amount. In this case, plural different types of liquids cannot be mixed uniformly unless agitation efficiency is enhanced through increased agitation energy, for example, by an increased agitation time or an increased agitation power in a subsequent agitation process, and otherwise the reliability of analysis value is compromised. When the capacity of the reaction vessel is very small and a small amount of powder-like or grain-like solid substance is put into a large amount of liquid and agitated, the same problem arises.

In view of the above, an object of the present invention is to provide an analyzing apparatus, a supply apparatus, an agitation apparatus, and an agitation method which can realize uniform agitation even when a small amount of liquid or solid is put into a large amount of liquid.

### MEANS FOR SOLVING PROBLEM

To solve the problem as described above and to achieve an object, an analyzing apparatus according to claim 1 is an analyzing apparatus for agitating plural different types of liquids to cause reaction to analyze a reaction liquid, and includes a sound wave generator that generates a sound wave to agitate a liquid held in a vessel, a supply unit that supplies, to the vessel holding a first liquid and transported, a second liquid or a solid of an amount smaller than an amount of the first liquid, and a drive controller that controls generation of the sound wave by the sound wave generator so that the first liquid is agitated when the supply unit supplies the second liquid or the solid.

Further, in the analyzing apparatus according to the present invention as recited in claim 2, the sound wave generator is held at a fixed relative position with respect to the vessel.

Further, in the analyzing apparatus according to the present invention as recited in claim 3, the sound wave generator is arranged on a bottom wall of the vessel.

Further, in the analyzing apparatus according to the present invention as recited in claim 4, the sound wave generator is arranged on a side wall of the vessel.

Further, in the analyzing apparatus according to the present invention as recited in claim 5, the drive controller controls the sound wave generator so that the sound wave is generated after the first liquid is dispensed into the vessel and before the supply unit supplies the second liquid or the solid into the vessel.

Further, in the analyzing apparatus according to the present invention as recited in claim 6, the supply unit moves between the vessel holding the first liquid and a supply source of the second liquid or the solid, and the drive controller controls the sound wave generator so that the sound wave is generated when the supply unit moves to a position for supplying the second liquid or the solid.

Further, in the analyzing apparatus according to the present invention as recited in claim 7, the drive controller controls the sound wave generator so that the sound wave is generated before the vessel holding the first liquid is transported to a position where the second liquid or the solid is supplied.

Further, in the analyzing apparatus according to the present invention as recited in claim 8, the sound wave generator is a surface-acoustic-wave element that generates a surface acoustic wave.

Further, to solve the problems as described above and to achieve an object, a supply apparatus according to claim 9 is a supply apparatus for supplying a liquid or a solid to a vessel, and includes a supply unit that supplies, to a vessel holding a first liquid, a second liquid or a solid, and a supply controller that controls timing of supply of the second liquid or the solid to the vessel by the supply unit, wherein the supply controller controls the supply unit so that the supply unit supplies the second liquid or the solid of an amount smaller than an amount of the first liquid after the first liquid is dispensed into the vessel.

Further, to solve the problems as described above and to achieve an object, an agitation apparatus according to claim 10 is an agitation apparatus for agitating a first liquid held in a vessel by irradiating a sound wave, and includes a sound wave generator that generates the sound wave, and a drive controller that controls timing of generation of the sound wave by the sound wave generator, wherein the drive controller controls the generation of the sound wave by the sound wave generator so that the first liquid is agitated when a second liquid or a solid is supplied to the vessel.

Further, to solve the problems as described above and to achieve an object, a method of agitation according to claim 11 is an agitation method for agitating a first liquid and a second liquid or a solid of an amount smaller than an amount of the first liquid, wherein the second liquid or the solid is supplied while the first liquid is agitated.

An expression that "the first liquid is agitated" in the description means that the first liquid is agitated by a sound flow produced by sound waves generated by the sound wave generator. However, the sound wave generator is not always in an operating state when the first liquid is agitated. For example, even after the sound wave generator stops operation, the sound waves generated before the sound wave generator stops operation remain and generate sound flows in the first liquid. Such state is also described as a state where "the first liquid is agitated".

### EFFECT OF THE INVENTION

In the analyzing apparatus, the agitation apparatus, and the agitation method according to the present invention, the drive controller controls the generation of sound wave by the sound wave generator so that the first liquid is agitated when the second liquid or the solid is supplied. Further, in the supply apparatus according to the present invention, the supply controller controls the supply unit so that the second liquid or the solid of a smaller amount than the first liquid is supplied after the first liquid is dispensed to the vessel. Therefore, according to the present invention, even when a small amount of the second liquid or the solid is supplied to a large amount of the first liquid, the first liquid is agitated when the second liquid or the solid is supplied, whereby the analyzing apparatus, the supply apparatus, the agitation apparatus, and the agitation method that can uniformly agitate the first liquid and the second liquid or the solid can be provided.

### BRIEF DESCRIPTION OF DRAWINGS

FIG. 1 is a schematic configuration diagram of an automatic analyzing apparatus and a supply apparatus according to a first embodiment;
FIG. 2 is a schematic diagram including an enlarged view of a reaction wheel of the automatic analyzing apparatus shown in FIG. 1 and an overall configuration diagram of the supply apparatus and an agitation apparatus;
FIG. 3 is an enlarged sectional view of a portion A of the reaction wheel where an extraction electrode is arranged;
FIG. 4 is a perspective view of a reaction vessel of the automatic analyzing apparatus according to the first embodiment;
FIG. 5 is a bottom view of the reaction vessel of FIG. 4;
FIG. 6 is a sectional view of the reaction vessel which is placed in a holder of the reaction wheel and to which a reagent is being dispensed;
FIG. 7 is a sectional view of the reaction vessel located at a position PN-1 in an agitation region wherein sound waves generated by a surface-acoustic-wave element are emitted to a reagent in the reaction vessel so that agitation of the reagent starts;
FIG. 8 is a sectional view of the reaction vessel located at a position PN in the agitation region wherein a specimen is dispensed to the agitated reagent;
FIG. 9 is a sectional view of the reaction vessel located at a position PN+1 in the agitation region wherein the specimen agitated by a sound flow spreads in the reagent;
FIG. 10 is a sectional view of the reaction vessel located at a position PN+2 in the agitation region wherein the specimen agitated by the sound flow spreads further extensively in the reagent;
FIG. 11 is a diagram including an enlarged view of a reaction wheel of an automatic analyzing apparatus of a second embodiment and an overall configuration diagram of a supply apparatus and an agitation apparatus;
FIG. 12 is an enlarged plan view of a portion of a sound wave generating substrate where sound wave generators are arranged;
FIG. 13 is a plan view of the reaction wheel showing a modification of an arrangement of the agitation region;
FIG. 14 is a physical configuration diagram of a modification of the agitation apparatus; and
FIG. 15 is a sectional view of a main part of a modification of the automatic analyzing apparatus in which the sound wave generator is arranged on a side wall of the reaction vessel.

### EXPLANATIONS OF LETTERS OR NUMERALS

- 1: Automatic analyzing apparatus
- 1a: Power supply unit
- 2: Work table
- 3: Specimen table
- 4: Specimen vessel
- 5: Supply apparatus
- 5a: Supply nozzle
- 6: Reaction wheel
- 6a: Holder
- 6c: Extraction electrode
- 9: Reaction vessel
- 10: Measuring optical system
- 10a: Light source
- 10b: Light-receiving element
- 11: Discharge device
- 12: Dispensing device
- 13: Reagent table
- 14: Reagent vessel
- 15: Reader device
- 16: Control unit
- 16a: Apparatus controller
- 16b: Linking unit
- 16c: Supply controller
- 17: Analyzing unit
- 18: Input unit
- 19: Display unit
- 20: Agitation apparatus
- 21: Surface-acoustic-wave element
- 22: Terminal substrate
- 23: Signal generator
- 24: Drive control circuit
- 26: Sound wave generating substrate
- 26a: Piezoelectric substrate
- 26b: Vibrator
- 27: Acoustic matching layer
- 30: Agitation apparatus
- 31: Signal transmitting unit
- 32: Drive controller
- 33: Agitation driving unit
- 34: Switch
- PN-1 to PN+2: Position
- Wa: Sound wave

### BEST MODE(S) FOR CARRYING OUT THE INVENTION

### First Embodiment

An analyzing apparatus, a supply apparatus, an agitation apparatus, and an agitation method according to a first embodiment of the present invention will be described in detail below with reference to the accompanying drawings.

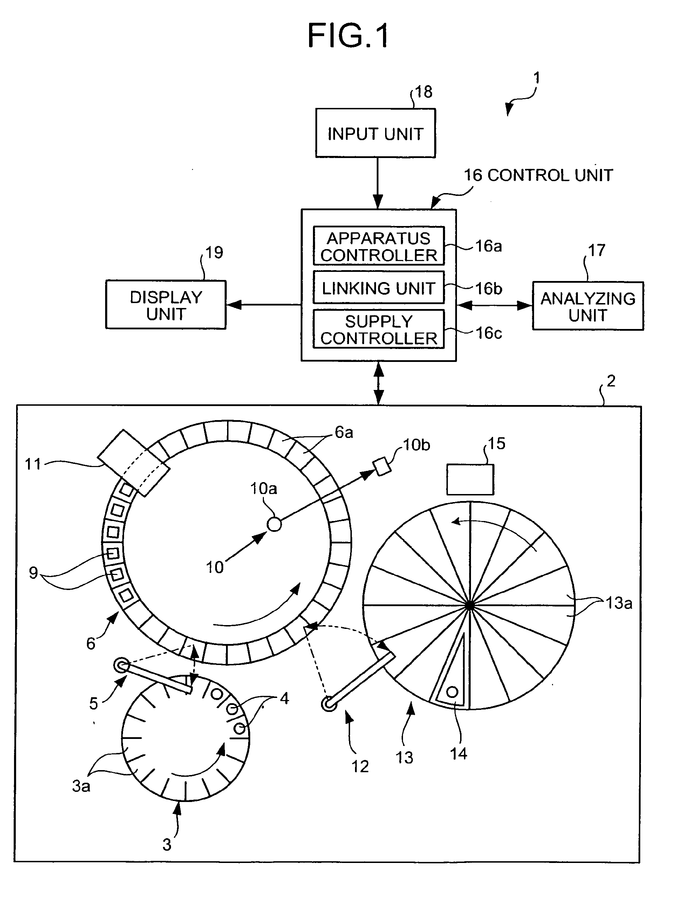

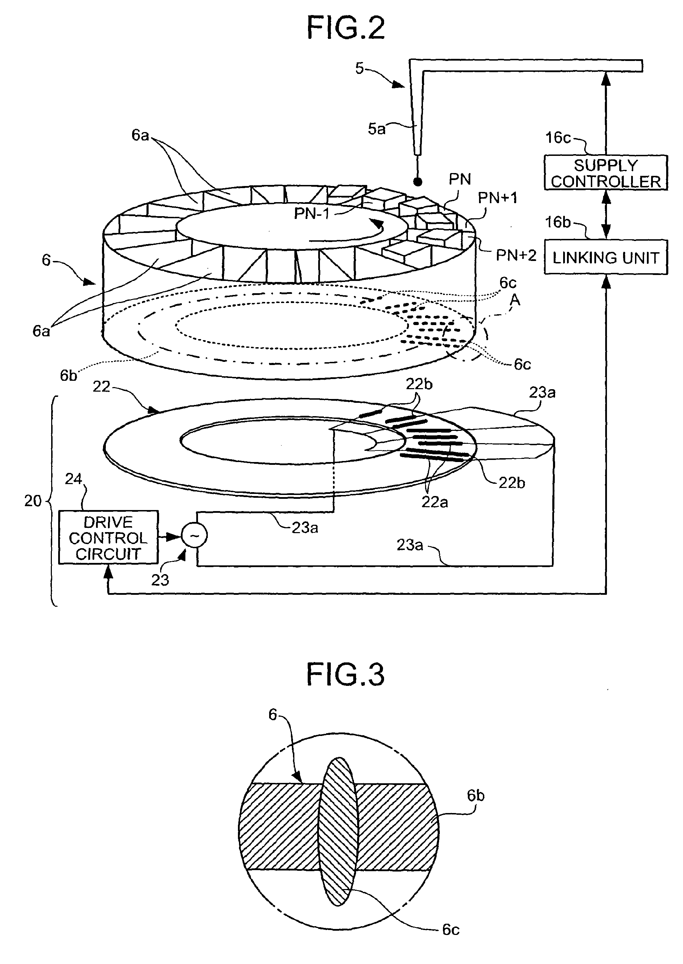

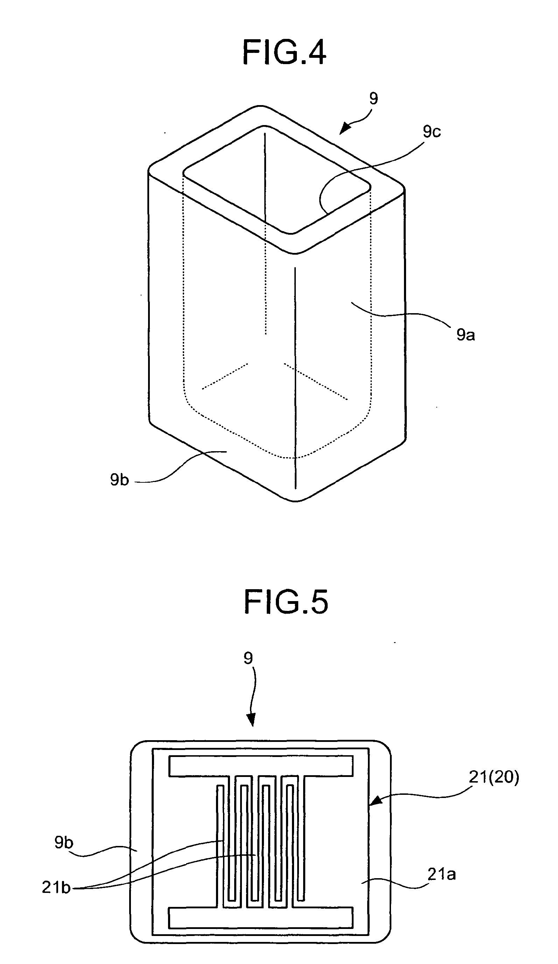

FIG. 1 is a schematic configuration diagram of an automatic analyzing apparatus and the supply apparatus according to the first embodiment. FIG. 2 is a schematic diagram including an enlarged view of a reaction wheel of the automatic analyzing apparatus shown in FIG. 1 and an overall configuration of the supply apparatus and the agitation apparatus. FIG. 3 is an enlarged sectional view of a portion A of the reaction wheel where an extraction electrode is arranged. FIG. 4 is a perspective view of a reaction vessel of the automatic analyzing apparatus according to the first embodiment. FIG. 5 is a bottom view of the reaction vessel of FIG. 4.

As shown in FIGS. 1 and 2, an automatic analyzing apparatus 1 includes a work table 2, and a specimen table 3, a reaction wheel 6, and a reagent table 13 are arranged on the work table 2 separate from each other so as to be freely rotatable and stopped at any position along a circumferential direction. The automatic analyzing apparatus 1 further includes an agitation apparatus 20. Further, the automatic analyzing apparatus 1 includes a supply apparatus 5 between the specimen table 3 and the reaction wheel 6, and a dispensing device 12 between the reaction wheel 6 and the reagent table 13.

The specimen table 3 is rotated by a driving unit in a direction indicated by an arrow shown in FIG. 1. The specimen table 3 further includes plural storage chambers 3a arranged equiangularly along an outer circumference thereof. Each storage chamber 3a houses in a detachable manner a specimen vessel 4 which holds a specimen.

The supply apparatus 5 supplies a specimen such as urine and blood by an amount smaller than an amount of a reagent to a reaction vessel 9. As shown in FIGS. 1 and 2, the supply apparatus 5 sequentially dispenses the specimen from the plural specimen vessels 4 on the specimen table 3 to the reaction vessel 9 placed in a holder 6a of the reaction wheel 6 using a supply nozzle 5a. In the supply apparatus 5, a supply controller 16c controls timing of supply of the specimen from the supply nozzle 5a to the reaction vessel 9 as shown in FIG. 2. The supply apparatus 5 is also employed for supplying to the reaction vessel 9 a powder-like or a grain-like solid of an amount smaller than the reagent for agitation. For example, sample-modified (specimen-modified) or reagent-modified magnetic beads, latex beads, or a liquid in which the beads-like, powder-like or grain-like solid is dispersed may be supplied.

The reaction wheel 6 is rotated in a direction indicated by an arrow in FIG. 1 by a driving unit which is different from the driving unit of the specimen table 3. Plural holders 6a that serve as storage chambers are arranged equiangularly along the outer circumference of the reaction wheel 6. The reaction vessel 9 is detachably held in each holder 6a. The reaction vessel 9 is an agitation vessel in which the reaction of the specimen and the reagent takes place. An opening is formed in each holder 6a at a radially inward side and a radially outward side so that light passes through the opening. Further, in each holder 6a, extraction electrodes 6c are arranged in a radial direction of the reaction wheel 6 penetrating a bottom wall 6b in a vertical direction as shown in FIGS. 2 and 3. The reaction wheel 6 rotates in one cycle by an amount represented as (one round-one reaction vessel)/4 in an anticlockwise direction. Hence, in four cycles, the reaction wheel 6 rotates by an amount corresponding to one reaction vessel 9 in a clockwise direction. The reaction wheel 6 may rotate in the clockwise direction. The reaction wheel 6 includes a measuring optical system 10 and a discharge device 11.

The reaction vessel 9 has a very small capacity of approximately a few nL to a few tens µL. The reaction vessel 9 is made of a material which transmits at least 80% of light included in analytical light (of 340 nm to 800 nm) emitted from a light source 10a, and made, for example, of glass such as heat resistance glass, and synthetic resin such as cyclic olefin and polystyrene. The reaction vessel 9 has a square-pole-like shape, and has a side wall 9a, a bottom wall 9b, and an opening 9c formed in an upper portion as shown in FIGS. 4 and 5. Liquid affinity treatment is performed on an inner surface of the reaction vessel 9 which holds the liquid such as a specimen and a reagent. In the reaction vessel 9, a part of each of two side walls 9a facing with each other and parallel with each other is used as a window that transmits the analytical light. As shown in FIG. 5, a surface-acoustic-wave element 21 is attached to a lower surface of the bottom wall 9b of the reaction vessel 9 with an acoustic matching layer therebetween.

The measuring optical system 10 emits analytical light (of 340 to 800 nm) from the light source 10a for analyzing the liquid in the reaction vessel 9 obtained as a result of reaction between the reagent and the specimen. Beams of analytical light emitted from the light source 10a pass through the liquid in the reaction vessel 9 and are received by a light-receiving element 10b arranged opposite to the light source 10a. On the other hand, the discharge device 11 has a discharge nozzle. After the reaction in the reaction vessel 9, the discharge device 11 sucks the liquid with the discharge nozzle and discharges the sucked liquid to a discharge vessel (not shown). The reaction vessel 9 passing through the discharge device 11 is transported to a washing device not shown and washed. The washed reaction vessel is used again for analysis of another specimen.

The dispensing device 12 dispenses a reagent of a larger amount than a specimen supplied by the supply apparatus 5. As shown in FIG. 1, the dispensing device 12 sequentially dispenses a reagent from a predetermined reagent vessel 14 on the reagent table 13 to the reaction vessel 9 placed in the holder 6a of the reaction wheel 6. When an amount of a liquid reagent is represented as MR, and an amount of a specimen as MS, ratio MS/MR of the amount MS of the specimen S to the amount MR of the liquid reagent R is within the range of 1/1000≤MS/MR≤1/4. When the specimen supplied to the reaction vessel 9 by the supply apparatus 5 to be agitated with the reagent is a powder-like or a grain-like solid, MS represents a cubic volume of the solid.

The reagent table 13 is rotated in a direction indicated by an arrow shown in FIG. 1 by a driving unit different from those for the specimen table 3 and the reaction wheel 6. On the reagent table 13, fan-like storage chambers 13a are arranged in a circumferential direction. The reagent vessel 14 is placed in a detachable manner in each storage chamber 13a. Each of the plural reagent vessels 14 is filled with a predetermined reagent corresponding to each examination item. On an outer surface of the reagent vessel 14, an information recording medium (not shown) recording information concerning the held reagent is pasted.

A reader device 15 is arranged outside the outer circumference of the reagent table 13. The reader device 15 reads out the information concerning the reagent, such as a type, a lot, and a valid date recorded in the information recording medium pasted onto the reagent vessel 14. The reader device 15 outputs the read information to the control unit 16.

The control unit 16 includes an apparatus controller 16a which controls operations of respective units of the automatic analyzing apparatus 1, a supply controller 16c which controls timing of the supply of the specimen from the supply nozzle 5a to the reaction vessel 9, and a linking unit 16b which links the control operations of the supply controller 16c and the drive control circuit 24 with each other. For example, a microcomputer provided with a recording function to store results of analysis is used as the control unit 16. The control unit 16 is connected to the supply apparatus 5, a light-receiving element 10b, the discharge device 11, the reader device 15, an analyzing unit 17, an input unit 18, a display unit 19, the agitation apparatus 20, and the like. The control unit 16 controls an operation of each unit of the automatic analyzing apparatus 1. Further, when the lot or the valid date of the reagent according to the information read out from the information recording medium is not within a set range, the control unit 16 controls the automatic analyzing apparatus 1 so as to restrict the analyzing operation or gives an alarm notification to an operator. In the control unit 16, the linking unit 16b is connected to the apparatus controller 16a and the supply controller 16c to synchronize and link control signals of the apparatus controller 16a and the supply controller 16c.

The analyzing unit 17 is connected to the light-receiving element 10b via the control unit 16. The analyzing unit 17 analyzes constituent concentration and the like of the specimen according to absorbancy of the liquid in the reaction vessel 9 based on the intensity of light received by the light-receiving element 10b, and outputs the result of analysis to the control unit 16. The input unit 18 operates to input the examination items and the like into the control unit 16. For example, a keyboard or a mouse may be used as the input unit 18. The display unit 19 displays contents of analysis, an alarm, and the like, and a display panel or the like may be used as the display unit 19.

The agitation apparatus 20 agitates the liquid held in the reaction vessel 9 by sound waves. The agitation apparatus 20 includes, in addition to the surface-acoustic-wave element 21 attached to the reaction vessel 9, a terminal substrate 22, a signal generator 23, and a drive control circuit 24, as shown in FIG. 2.

The surface-acoustic-wave element 21 includes, as shown in FIG. 5, a piezoelectric substrate 21a of piezoelectric material such as lithium niobate (LiNb03) and a vibrator (sound emitter) 21b of interdigital transducers (IDT) formed thereon.

The terminal substrate 22 is a ring-like insulating plate arranged below the reaction wheel 6 as shown in FIG. 2. The terminal substrate 22 does not rotate. The supply apparatus 5 supplies the specimen S from the supply nozzle 5a to the reaction vessel 9 held by the holder 6a of a predetermined position among the plural holders 6a. If this position is represented as PN, a range corresponding to a position PN-1 preceding the position PN to a position PN+2 which is two positions subsequent to the position PN is set as an agitation region. The terminal substrate 22 includes contact electrodes 22a and 22b arranged in an area corresponding to the agitation region. The contact electrodes 22a and 22b are brought into contact with the extraction electrode 6c to supply power to the vibrator 21b. The agitation region is not limited to an area corresponding to four positions PN-1 to PN+2. As far as the agitation region includes the position PN where the supply nozzle 5z supplies the specimen S, the agitation region may be set to a larger range corresponding to more than four positions, or to a smaller range corresponding to less than four positions, as necessary.

As shown in FIG. 2, the signal generator 23 connects the contact electrodes 22a and 22b by wires 23a. The signal generator 23 outputs high-frequency signals of approximately a few tens MHz to a few hundreds MHz to the surface-acoustic-wave element 21 according to the control signals supplied by the drive control circuit 24, and oscillates the vibrator 21b to generate sound waves. The drive control circuit 24 is an electronic control unit (ECU) incorporating a memory and a timer, and controls the drive signals of the surface-acoustic-wave element 21.

The drive control circuit 24 is connected to the supply controller 16c via the linking unit 16b. The drive control circuit 24 controls the operation of the signal generator 23, and the control operation of the drive control circuit 24 is linked to the control operation of the supply controller 16c. The drive control circuit 24 controls, for example, characteristics (such as frequency, strength, phase, and wave characteristic), waveform (such as sine wave, triangular wave, rectangular wave, and burst wave), modulation (amplitude modulation and frequency modulation), and the like of the sound waves generated by the surface-acoustic-wave element 21 according to an analysis item or the property of the liquid. Further, the drive control circuit 24 can switch the frequency of oscillation signals generated by the signal generator 23 according to the incorporated timer.

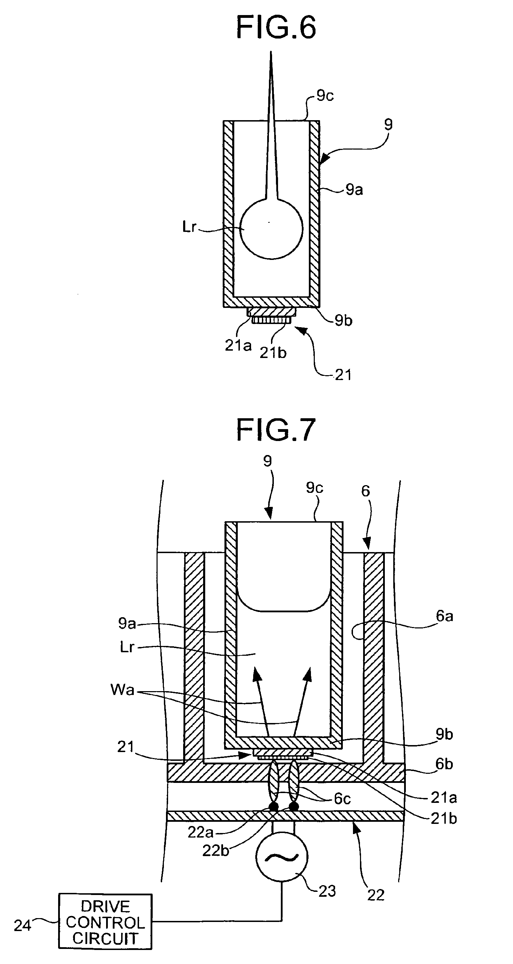

The automatic analyzing apparatus 1 configured as described above agitates the reagent and the specimen by an agitation method described below. The reaction vessels 9 placed in the holders 6a move along the circumferential direction following the rotation of the reaction wheel 6. A reagent Lr in the predetermined reagent vessel 14 on the reagent table 13 is sequentially dispensed to the reaction vessels 9 through the nozzle of the reagent dispensing mechanism 12 (see FIG. 6). When the reaction vessel 9 in which the reagent is dispensed moves to the agitation region according to the rotation of the reaction wheel 6 and reaches the position PN-1, the extraction electrode 6c arranged in the bottom wall 6b of the reaction wheel 6 touch the contact electrodes 22a and 22b to supply power to the surface-acoustic-wave element 21 as shown in FIG. 7. Thus, the vibrator 21b of the surface-acoustic-wave element 21 starts generating the sound waves which are propagated through the piezoelectric substrate 21a, leak through the bottom wall 9b into the reagent Lr, and are emitted to the reagent Lr. As a result, in the reaction vessel 9, the sound waves Wa leaking into the reagent Lr generate sound flows in the dispensed reagent Lr. The sound flow starts agitating the reagent Lr.

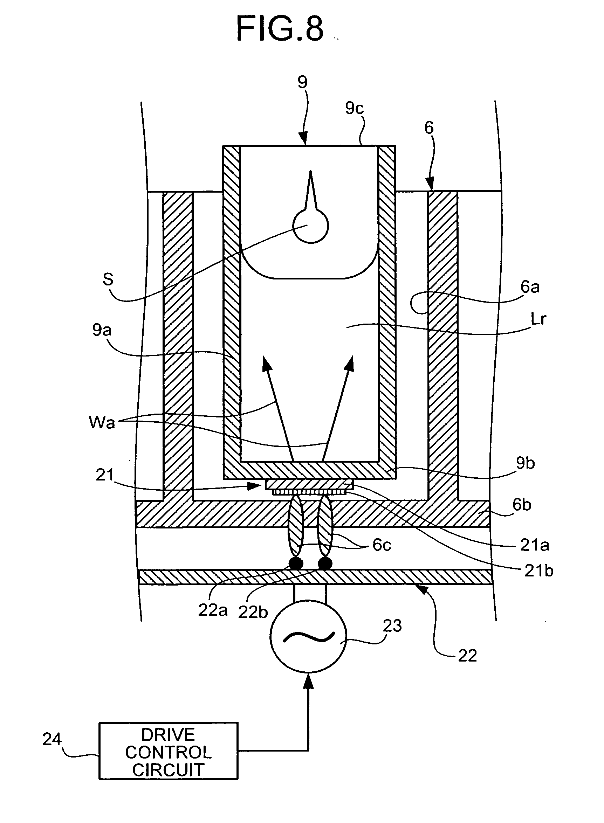

When the reaction vessel 9 moves according to the rotation of the reaction wheel 6 to the position PN where the specimen S is supplied to the reaction vessel 9, the supply nozzle 5a of the supply apparatus 5 dispenses the specimen S to the reagent Lr of the reaction vessel 9 as shown in FIG. 8. Since the agitation of the reagent Lr in the reaction vessel 9 starts at the previous position PN-1, the reagent is still flowing. Hence, the dispensed specimen S is quickly drawn into the reagent Lr because of the sound flow. More specifically, since the influence of the surface tension of the reagent Lr is suppressed, the dispensed specimen S is not adsorbed to the surface of the reagent Lr by the surface tension. Thus, the agitation method of the present invention is characterized in that a second liquid, i.e., the specimen S is supplied while a first liquid, i.e., the reagent Lr is agitated.

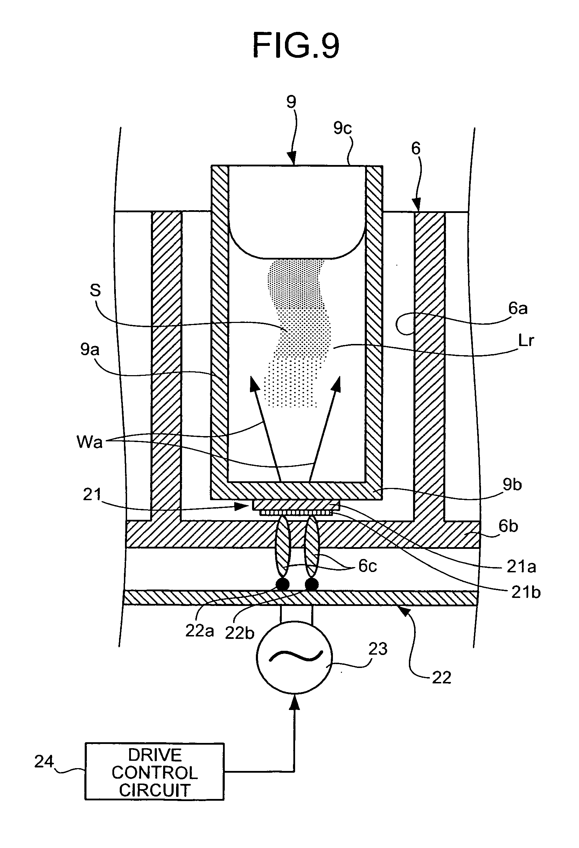

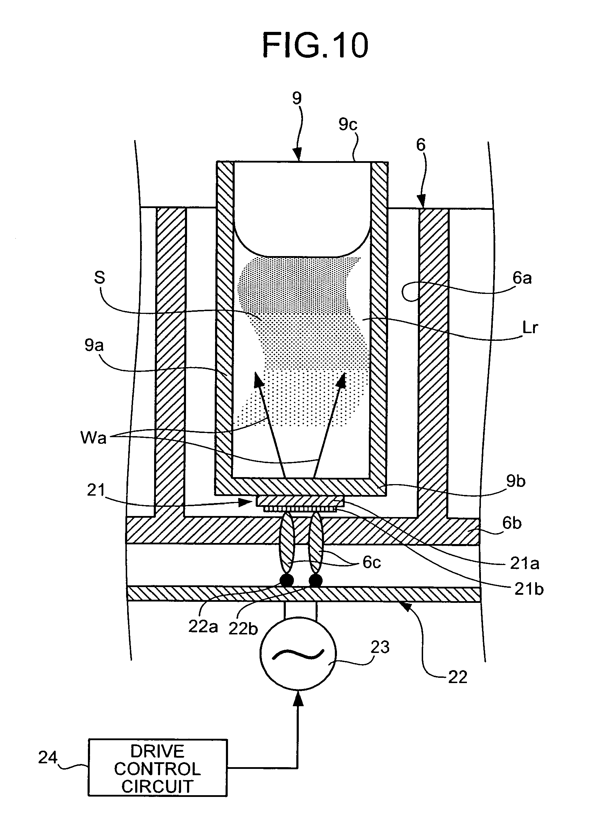

As the reaction vessel 9 moves to the position PN+1 according to the rotation of the reaction wheel 6, the sound flow generated by the sound wave Wa leaking out into the reagent Lr agitates the specimen S and makes the specimen S spread in the reagent Lr as shown in FIG. 9. As shown in FIG. 10, when the reaction vessel 9 reaches the position PN+2, the specimen S further spreads extensively in the reagent Lr because of the agitation by the sound flow, whereby the specimen S and the reagent Lr are efficiently agitated and their reaction is enhanced. In comparison with an apparatus which starts agitation after the specimen S is dispensed to the reagent Lr, the automatic analyzing apparatus 1 can agitate the reagent Lr and the specimen S uniformly in a short time.

When the reaction vessel 9 moves out of the agitation region according to the rotation of the reaction wheel 6, the extraction electrode 6c arranged in the bottom wall 6b of the reaction wheel 6 are brought out of contact from the contact electrodes 22a and 22b, whereby the power supply to the surface-acoustic-wave element 21 stops. Thus, the vibrator 21b of the surface-acoustic-wave element 21 stops generating the sound waves and the agitation of the reagent Lr and the specimen S in the reaction vessel 9 stops.

After sufficient agitation, the reaction liquid of the reagent Lr and the specimen S is subjected to photometry with the use of light flux emitted from the light source 10a of the measuring optical system 10. After the photometry, the reaction wheel 6 further rotates to make a waste of the reaction liquid remaining in the reaction vessel 9 discharged by the discharge device 11. After the washing device (not shown) washes the reaction vessel 9, the reaction vessel 9 is used again for the analysis of the specimen.

As can be seen from the foregoing, in the automatic analyzing apparatus 1 of the first embodiment, the drive control circuit 24 controls the generation of sound waves by the surface-acoustic-wave element 21 so that the reagent Lr is agitated when the specimen S is supplied. Thus, the automatic analyzing apparatus 1, the supply apparatus 5, the agitation apparatus 20, and the agitation method according to the first embodiment can agitate the reagent Lr and the specimen S uniformly even when a small amount of specimen S is supplied to a large amount of reagent Lr.

### Second Embodiment

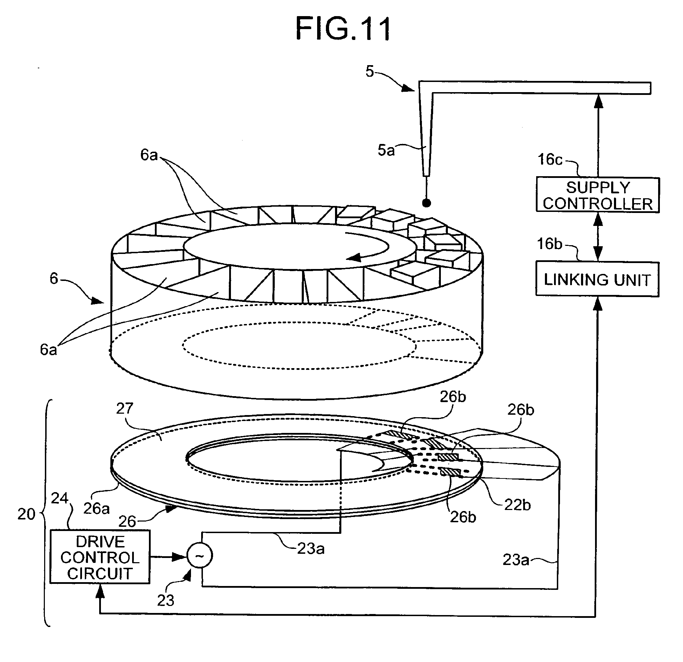

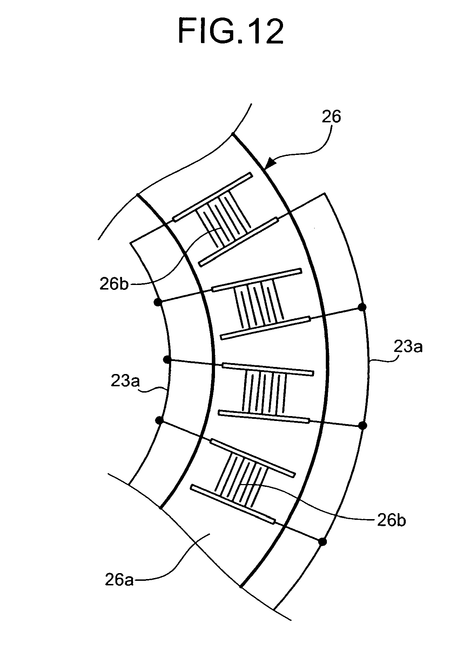

An analyzing apparatus, a supply apparatus, an agitation apparatus, and an agitation method according to a second embodiment of the present invention will be described in detail below with reference to the accompanying drawings. The automatic analyzing apparatus according to the first embodiment includes the surface-acoustic-wave element 21 which serves as a sound wave generator and is attached to the reaction vessel 9, and the surface-acoustic-wave element 21 is connected to the signal generator 23 via the extraction electrode 6c formed in the reaction wheel 6 and the terminal substrate 22. On the other hand, in the automatic analyzing apparatus according to the second embodiment, the sound wave generator is arranged in a sound wave generating substrate which corresponds to the terminal substrate 22. FIG. 11 shows an enlarged view of the reaction wheel of the automatic analyzing apparatus according to the second embodiment, together with an overall configuration of a supply apparatus and an agitation apparatus. FIG. 12 is an enlarged plan view of a portion of the sound wave generating substrate where the sound wave generator is arranged. The automatic analyzing apparatus, the supply apparatus, and the agitation apparatus according to the second embodiment have the same configurations as the automatic analyzing apparatus, the supply apparatus, and the agitation apparatus shown in FIG. 1 except the configuration of the sound wave generating substrate. Elements having the same configuration as those of the first embodiment will be denoted by the same reference characters in the description.

The reaction wheel has the holder 6a which does not have a bottom portion, and has an opening instead. Further, the sound wave generator is arranged in a sound wave generating substrate 26 and not in the reaction vessel 9. The sound wave generating substrate 26 does not rotate similarly to the terminal substrate 22. As shown in FIGS. 11 and 12, the sound wave generating substrate 26 includes a ring-like piezoelectric substrate 26a and vibrators (sound emitter) 26b of interdigital transducers (IDT) arranged on the upper surface of the piezoelectric substrate 26a at four positions along the circumferential direction at intervals corresponding to the intervals of the arranged positions of the plural holders 6a. On the upper surface of the sound wave generating substrate 26, an acoustic matching layer 27 is arranged. The acoustic matching layer 27 is a liquid such as water, or gel, for example.

The reaction wheel 6 is arranged on the sound wave generating substrate 26 via the acoustic matching layer 27. Even though the automatic analyzing apparatus 1 uses the sound wave generating substrate 26 in place of the terminal substrate 22, when the reaction vessels 9 are placed in the holders 6a, respectively, and the reaction vessels 9 sequentially move through the agitation region from the position PN-1 to the position PN+2 according to the rotation of the reaction wheel 6, the sound wave generated by the vibrator 26b is emitted through the bottom wall 9b of the reaction vessel 9 to the reagent Lr.

Thus, in the automatic analyzing apparatus 1 according to the second embodiment, the drive control circuit 24 controls the vibrator 26b so that the supply apparatus 5 supplies the specimen S while the reagent Lr is agitated. The automatic analyzing apparatus 1, the supply apparatus 5, the agitation apparatus 20, and the agitation method according to the second embodiment can agitate the reagent Lr and the specimen S uniformly even when a small amount of specimen S is supplied to a large amount of reagent Lr.

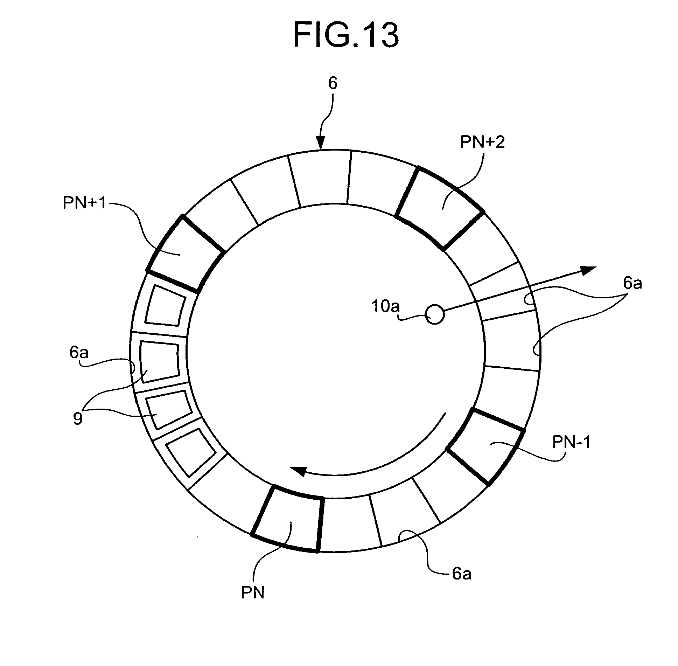

In the automatic analyzing apparatus 1 according to the first or the second embodiment, the agitation region is set to the contiguous range from the position PN-1 to the position PN+2 around the position PN where the supply apparatus 5 supplies the specimen S through the supply nozzle 5a. Alternatively, however, the positions PN-1, PN+1, and PN+2 can be arranged separately from the position PN as in the reaction wheel 6 shown in FIG. 13.

The automatic analyzing apparatus 1 and the agitation apparatus 20 according to the first embodiment use the terminal substrate 22 and supply the power to the vibrator 21b by bringing the extraction electrode 6c and the contact electrodes 22a and 22b in contact with each other in the agitation region according to the rotation of the reaction wheel 6, whereby the liquid held in the reaction vessel 9 is agitated. On the other hand, the automatic analyzing apparatus 1 and the agitation apparatus 20 according to the second embodiment use the sound wave generating substrate 26 and agitate the liquid held in the reaction vessel 9 when the position of the reaction vessel 9 coincides with the position of the vibrator 26b in the agitation region according to the rotation of the reaction wheel 6.

Therefore, in the automatic analyzing apparatus 1 and the agitation apparatus 20 of the first and the second embodiments, the liquid held in the reaction vessel 9 is agitated only intermittently when the reaction vessel 9 stops at the positions PN-1 to PN+2 in the agitation region according to the rotation of the reaction wheel 6.

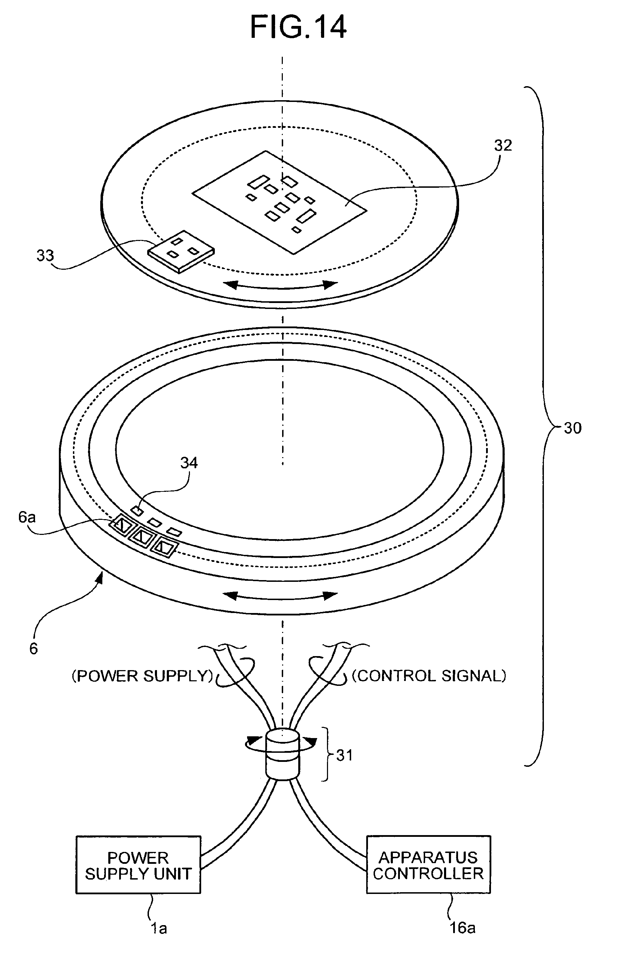

Alternatively, however, the automatic analyzing apparatus 1 of the first embodiment can use an agitation apparatus 30 shown in FIG. 14 in place of the agitation apparatus 20. The agitation apparatus 30 includes a signal transmitting unit 31, a drive controller 32, and plural agitation driving units 33.

The signal transmitting unit 31 includes a slip ring which transmits direct-current power-supply signals supplied from a power supply unit 1a of the automatic analyzing apparatus 1 and alternate-current control signals supplied from the apparatus controller 16a. The drive controller 32 corresponds to the drive control circuit 24, and controls the agitation driving unit 33 to control the agitation operation of the surface-acoustic-wave element 21 based on the control signals supplied from the signal transmitting unit 31. The agitation driving unit 33 corresponds to the signal generator 23 and outputs driving signals for agitating the liquid in the reaction vessel 9 according to the control signals supplied from the drive controller 32.

In each of the agitation driving units 33, plural combinations of the surface-acoustic-wave element 21 and a switch 34 are connected in parallel. The switch 34 serves to switch over electrical connection states (on and off) of the surface-acoustic-wave element 21. The switch 34 is a high-frequency relay, a high-frequency semiconductor switch, and the like. The drive controller 32 controls the operation of the switch 34. Among the parallel-connected plural switches 34, one is always turned on so that the impedance matching of each combination of the agitation driving unit 33 and the surface-acoustic-wave element 21 is maintained. The same number of combinations of switch 34 and the surface-acoustic-wave element 21 may be connected to every agitation driving unit 33, or the number of combinations connected may be different for each agitation driving unit 33.

When the agitation apparatus 30 configured as described above is employed, the automatic analyzing apparatus 1 of the first embodiment can continuously agitate the liquid held in the reaction vessel 9 while the reaction wheel 6 is rotating as well as when the reaction wheel 6 is in halt by constantly sending the power-supply signals and the control signals to the agitation apparatus 30 regardless of the rotating position of the reaction wheel 6. The driving controller 32 and the agitation driving unit 33 do not need to be arranged on the reaction wheel 6. The driving controller 32 and the agitation driving unit 33 may be arranged outside the reaction wheel 6, in other words, they may be connected to the switch 34 via the signal transmitting unit 31. When the driving controller 32 and the agitation driving unit 33 are arranged outside the reaction wheel 6, weight load of the reaction wheel 6 can be reduced.

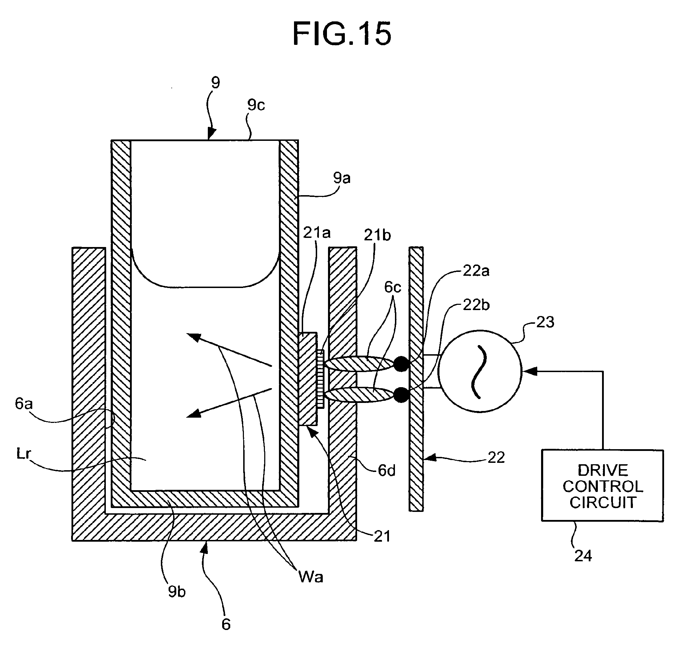

Further, the surface-acoustic-wave element 21 which serves as the sound wave generator may be arranged on the side wall 9a of the reaction vessel 9 as shown in FIG. 15. In this case, the extraction electrode 6c is arranged so as to penetrate the side wall 6d of the reaction wheel 6 in the radial direction. The terminal substrate 22 includes contact electrodes 22a and 22b that are arranged outside the outer circumference of the reaction wheel 6 within the agitation region corresponding to the range of the position PN-1 to the position PN+2 to be brought into contact with the extraction electrode 6c and to supply power to the vibrator 21b. The agitation region is not limited to an area corresponding to four positions PN-1 to PN+2. As far as the agitation region includes the position PN where the supply nozzle 5a supplies the specimen S, the agitation region may be set to a larger range corresponding to more than four positions, or to a smaller range corresponding to less than four positions, as necessary. When the surface-acoustic-wave element 21 is arranged on the side wall 9a of the reaction vessel 9 and the terminal substrate 22 is arranged outside the outer circumference of the reaction wheel 6, a degree of freedom in designing the automatic analyzing apparatus 1 increases.

In the analyzing apparatus of the present invention, the drive controller controls the sound wave generator so that the sound flow is generated in the first liquid by the sound waves when the second liquid or the solid supplied by the supply unit is brought into contact with the first liquid. In other words, the analyzing apparatus of the present invention may supply the second liquid or the solid to the vessel while the sound flow is generated in the first liquid. As far as the sound flow is generated in the first liquid held in the vessel, the sound wave generator of the analyzing apparatus or the agitation apparatus may well be activated or stopped. Therefore, the analyzing apparatus and the agitation apparatus may supply the second liquid or the solid to the vessel at such timing that the sound flow still remains in the first liquid because of the sound waves previously generated by the sound wave generator even though the sound wave generator is currently stopped.

### INDUSTRIAL APPLICABILITY

As can be seen from the foregoing, the analyzing apparatus, the supply apparatus, the agitation apparatus, and the agitation method according to the present invention are useful for agitating the first liquid and the second liquid or the solid uniformly by supplying a small amount of the second liquid or the solid to a large amount of the first liquid being agitated, and more particularly, are suitable for uniformly agitating the reagent and the specimen in the automatic analyzing apparatus.

## Claims

1. An analyzing apparatus for agitating plural different types of liquids to cause reaction to analyze a reaction liquid, comprising:
a sound wave generator that generates a sound wave to agitate a liquid held in a vessel;
a supply unit that supplies, to the vessel holding a first liquid and transported, a second liquid or a solid of an amount smaller than an amount of the first liquid; and
a drive controller that controls generation of the sound wave by the sound wave generator so that the first liquid is agitated when the supply unit supplies the second liquid or the solid.

2. The analyzing apparatus according to claim 1, wherein
the sound wave generator is held at a fixed relative position with respect to the vessel.

3. The analyzing apparatus according to claim 2, wherein
the sound wave generator is arranged on a bottom wall of the vessel.

4. The analyzing apparatus according to claim 2, wherein
the sound wave generator is arranged on a side wall of the vessel.

5. The analyzing apparatus according to claim 1, wherein
the drive controller controls the sound wave generator so that the sound wave is generated after the first liquid is dispensed into the vessel and before the supply unit supplies the second liquid or the solid into the vessel.

6. The analyzing apparatus according to claim 5, wherein
the supply unit moves between the vessel holding the first liquid and a supply source of the second liquid or the solid, and
the drive controller controls the sound wave generator so that the sound wave is generated when the supply unit moves to a position for supplying the second liquid or the solid.

7. The analyzing apparatus according to claim 5, wherein
the drive controller controls the sound wave generator so that the sound wave is generated before the vessel holding the first liquid is transported to a position where the second liquid or the solid is supplied.

8. The analyzing apparatus according to claim 1, wherein
the sound wave generator is a surface-acoustic-wave element that generates a surface acoustic wave.

9. A supply apparatus for supplying a liquid or a solid to a vessel, comprising:
a supply unit that supplies, to a vessel holding a first liquid, a second liquid or a solid; and
a supply controller that controls timing of supply of the second liquid or the solid to the vessel by the supply unit, wherein
the supply controller controls the supply unit so that the supply unit supplies the second liquid or the solid of an amount smaller than an amount of the first liquid after the first liquid is dispensed into the vessel.

10. An agitation apparatus for agitating a first liquid held in a vessel by irradiating a sound wave, comprising:
a sound wave generator that generates the sound wave; and
a drive controller that controls timing of generation of the sound wave by the sound wave generator, wherein
the drive controller controls the generation of the sound wave by the sound wave generator so that the first liquid is agitated when a second liquid or a solid is supplied to the vessel.

11. An agitation method for agitating a first liquid and a second liquid or a solid of an amount smaller than an amount of the first liquid, wherein
the second liquid or the solid is supplied while the first liquid is agitated.
